# EUROPEAN PATENT SPECIFICATION

(11) **EP 4 197 747 B1**
(45) Date of publication and mention of the grant of the patent: **13.03.2024**
(21) Application number: 21214723.5
(22) Date of filing: 15.12.2021
(51) Int. Cl.: B29C 65/00, F16B 11/00, B29C 65/78, B29C 65/48, B29C 65/58, B29C 65/50

(54) **CONNECTION PART FOR AN INDUSTRIAL ASSEMBLY PROCESS, PART CONNECTION AND METHOD FOR ADHESIVELY CONNECTING A CONNECTION PART AND A MATING PART**
VERBINDUNGSSTÜCK FÜR EIN INDUSTRIELLES MONTAGEVERFAHREN, STÜCKVERBINDUNG UND VERFAHREN ZUR KLEBEVERBINDUNG EINES VERBINDUNGSSTÜCKS UND EINES GEGENSTÜCKS
PARTIE DE CONNEXION POUR UN PROCESSUS D'ASSEMBLAGE INDUSTRIEL, CONNEXION DE PARTIE ET PROCÉDÉ DE CONNEXION PAR ADHÉSION D'UNE PARTIE DE CONNEXION ET D'UNE PARTIE D'ACCOUPLEMENT

(43) Date of publication of application: 21.06.2023
(73) Proprietor: Volvo Car Corporation, 40531 Göteborg (SE)
(72) Inventor: ANDERSSON, Markus, 40531 Göteborg (SE)
(74) Representative: Maiwald GmbH

(56) References cited:
- CA-C- 2 203 644
- US-A1- 2006 021 242
- US-A1- 2013 200 237

## Description

The present disclosure relates to a connection part for an industrial assembly process.

Moreover, the present disclosure is directed to a part connection comprising such a connection part and a mating part.

Additionally, the present disclosure relates to a method for adhesively connecting a connection part and a mating part.

Such part connections, connection parts, mating parts and methods for adhesively connecting a connection part and a mating part are omnipresent in industrial assembly processes, e.g. in the automotive sector.

Adhesive connections, for example adhesive connections comprising an adhesive tape, are often used since such connections can be established in a simple manner without the need of specific tools.

However, when using adhesive connections, care has to be taken that the connection part and the mating part are in the desired relative position upon the first contact between these parts. This is due to the fact that adhesive connections, especially adhesive connections comprising an adhesive tape, usually are established upon this first contact. Normally, it is not possible to further align the connection part and the mating part once the connection is established. Consequently, when manually establishing such an adhesive connection, a high degree of attention and concentration is necessary. When automatically establishing such an adhesive connection, elaborate and precise control methods have to be used.

A connection part according to the preamble of claim 1 is for example known from US 2006/0021242 A1.

It is therefore an objective of the present disclosure to provide parts and methods necessary for an adhesive connection that can be established in a precise and simple manner.

The problem is at least partially solved or alleviated by the subject matter of the independent claims of the present disclosure, wherein further examples are incorporated in the dependent claims.

According to a first aspect, there is provided a connection part for an industrial assembly process. The connection part has a body portion and a connection surface being arranged on the body portion. The connection surface is configured for being connected to a mating part. The connection part further comprises at least one positioning protrusion being located at a distance away from an edge of the connection surface and being movably connected to the body portion. The at least one positioning protrusion is leg-shaped, one end portion thereof being connected to the body portion. In a pre-assembly position the positioning protrusion at least partially protrudes with respect to the connection surface, and in an assembly position the positioning protrusion is flush with the connection surface or is retracted with respect to the connection surface. In this context, a movable connection between the body portion and the positioning protrusion may for example be realized by a connection allowing the positioning protrusion to pivot or to slide with respect to the body portion. The movable connection may thus comprise a joint and/or a linear guide. In that one end of the leg-shaped positioning protrusion is connected to the body portion, the positioning protrusion is reliably connected to the body portion and movable at the same time. The connection surface may have any form. For example, the connection surface is flat or curved. The fact that the positioning protrusion is arranged at a distance away from an edge of the connection surface means that the positioning protrusion is not configured for connecting the connection part to the mating part. Such a connection part may be connected to the mating part in a simple and exact manner since in the pre-assembly position of the positioning protrusion, the positioning protrusion prevents an undesired contact between the connection part and the mating part. In other words, the positioning protrusion keeps the connection surface of the connection part at a predefined distance from the mating part. This facilitates the positioning of the connection part relative to the mating part. Once the desired relative position has been reached, the positioning protrusion is retracted such that a connection may be established via the connection surface of the connection part. The positioning protrusion does not hinder this connection and does not have any negative influences thereon.

The industrial assembly process may be an automotive assembly process.

In an example, the connection surface may be positioned at a base surface of the body portion. The connection surface may extend along a length of the base surface. Alternatively or additionally, the connection surface may extend along a width of the base surface. It is also possible that the connection surface extends along a width and/or a length of an intermediate portion of the base surface. Such connection surfaces allow for stable and reliable connections.

In an example, the connection surface is formed by an adhesive layer being arranged on the body portion. Such an adhesive layer is suitable for providing a stable and precise connection.

In an example, the adhesive layer comprises an adhesive tape. This is a simple and reliable manner for providing an adhesive layer.

In an example, the at least one positioning protrusion is movably connected to the body portion via an elastically deformable section of the body portion and/or an elastically deformable section of the positioning protrusion. Such a connection can be produced at comparatively low costs. Moreover, by choosing an appropriate material and an appropriate geometry of the deformable section, the movability can be adjusted depending on the specific application.

For example, the leg-shaped positioning protrusion may substantially extend in parallel to the connection surface. In this case, the end portion of the positioning protrusion not being connected to the body portion may protrude over the connection surface in the pre-assembly position.

The leg-shaped positioning protrusion may be at least partially elastically deformable.

In an example, at least two positioning protrusion may be provided on the body portion of the connection part. The positioning protrusions may be positioned on opposing sides of the connection surface. Consequently, undesired contacts between the connection surface of the connection part and the mating part are avoided with enhanced reliability. The at least two positioning protrusions may be designated a first positioning protrusion and a second positioning protrusion.

In another example, at least three positioning protrusions are provided on the body portion of the connection part. In such a case, the connection part may assume a statically well-defined state when being in the pre-assembly position and contacting a mating part. Thus, the connection surface is kept at a predefined distance from the mating part. Of course, also more positioning protrusions can be provided.

In an example, the connection part comprises a securing means. In the assembly position, the at least one positioning protrusion is secured on the body portion by the securing means. The positioning protrusion is thus held in the assembly position. Consequently, it is not able to return to the pre-assembly position once it has reached the assembly position. This also means that the positioning protrusion does not influence a connection between the connection surface and a mating part. Such a connection is reliable and stable.

In an example, the securing means comprises a securing protrusion and a corresponding securing depression for each of the positioning protrusions. In the assembly position, the securing protrusion engages the securing depression and in the pre-assembly position the securing protrusion and the securing depression are disengaged. Such a securing means is simple in design and reliable in operation. In this context, the securing protrusion may be pushed into engagement with the corresponding securing depression when pressing the connection surface against a corresponding surface of the mating part for establishing a connection. The securing protrusion and the corresponding securing depression are shaped such that the securing protrusion is not able to leave the securing depression.

In an example, the securing means may comprise a snap-on mechanism or an interference fit mechanism. Consequently, the positioning protrusion may be reliably secured on the body portion.

In an example, the securing means may be configured for producing a sound when reaching the state in which the at least one positioning protrusion is secured on the body portion. This sound may be a click sound or a clack sound. Consequently, a user can be sure that the positioning protrusion is secured on the body portion without having to visually verify this fact. In the example where the securing means comprises a securing protrusion and a securing depression, the sound may be produced by the securing protrusion entering the securing depression.

In an example, the securing means is configured such that the state in which the at least one positioning protrusion is secured on the body portion is reached by applying a force equaling, exceeding or being smaller than a predefined mounting force. If the force equals the mounting force or is smaller than the mounting force, the positioning protrusion may be transferred into the secured position by simply mounting the connection part on the mating part. No additional force or effort is necessary. If the force exceeds the mounting force, the force for bringing the positioning protrusion into the secured state creates a predefined resistance when mounting the connection part to the mating part. This prevents undesired connections. In a case in which the securing means comprises a securing protrusion and a securing depression, the force being necessary for moving the securing protrusion into the securing depression may be adjusted by choosing an appropriate geometry of the securing protrusion and the securing depression and/or by choosing appropriate materials.

In an example, the body portion and the positioning protrusion are formed as an integral structure. Thus, no assembly is necessary.

The body portion and the positioning protrusions may also be produced as an integral structure, e.g. by injection molding, casting or by a generative manufacturing process.

According to a second aspect, there is provided a part connection comprising a connection part according to the present disclosure and a mating part. The mating part has a mating part body with a counter-connection surface. The connection part and the mating part are connected via the connection surface and the counter-connection surface. To this end, an adhesive layer, e.g. in the form of an adhesive tape, may be provided on at least one of the connection surface and the counter-connection surface. Such a part connection is highly reliable. Moreover, since a connection part according to the present disclosure is used, the mating part and the connection part may be positioned relative to one another with high precision. The connection may be established in a simple manner.

According to a third aspect, there is provided a method for adhesively connecting a connection part and a mating part. The connection part has a body portion, a connection surface being arranged on the body portion, and at least one positioning protrusion being located at a distance away from an edge of the connection surface and being movably connected to the body portion. The at least one positioning protrusion is leg-shaped, wherein one end portion thereof is connected to the body portion. The mating part has a mating part body with a counter-connection surface. The method comprises:
- bringing the at least one positioning protrusion in contact with the mating part body, wherein the at least one positioning protrusion at least partially protrudes with respect to the connection surface such that the connection surface and the counter-connection surface are arranged within a predefined distance from each other,
- pressing the connection part and the mating part towards one another until the connection surface and the counter-connection surface contact each other and such that the at least one positioning protrusion is moved to a position in which it is flush with the connection surface or is retracted with respect to the connection surface.
In other words, the connection surface and the counter-connection surface are first kept within a predefined distance. This configuration may be used for precisely positioning the connection part with respect to the mating part. Unintended contacts between the connection surface and the counter-connection surface are excluded. Thereafter, the positioning protrusion is retracted at the same time at which the connection surface and the counter-connection surface are brought in contact. Thus a precise connection may be established in a simple manner.

For establishing the adhesive connection, an adhesive layer, e.g. in the form of an adhesive tape, may be provided on at least one of the connection surface and the counter-connection surface.

In an example, the method comprises sliding the at least one positioning protrusion on the mating part body and bringing the connection surface and the counter-connection surface in a desired relative position while the connection surface and the counter-connection surface are arranged within the predefined distance. This facilitates establishing a precise connection. The positioning protrusion may be used as a sliding block. As before, undesired contacts between the connection surface and the counter-connection surface are avoided.

In an example, pressing the connection part and the mating part towards one another comprises applying a mounting force to at least one of the connection part and the mating part. The mounting force is oriented non-parallel to the connection surface. It is obvious that the mounting force it applied to one of the parts and that a corresponding counter-force needs to be applied to the respective other part. The mounting force may be oriented perpendicular to at least one of the connection surface and the counter-connection surface. The mounting force is to be understood as the force necessary for establishing the connection between the connection part and the mating part.

It should be noted that the above examples may be combined with each other irrespective of the aspect involved. Accordingly, the method may be combined with structural features and, likewise, the connection part and the part connection may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows a connection part according to the present disclosure and a mating part, wherein the connection part and the mating parte are in a disconnected state, and
- Fig. 2 to Fig. 5: partially shows the connection part and the mating part of Figure 1 along a direction II during the performance of a method according to the present disclosure for forming a part connection according to the present disclosure.

The figures are merely schematic representations and serve only to illustrate examples of the disclosure. Identical or equivalent elements are in principle provided with the same reference signs.

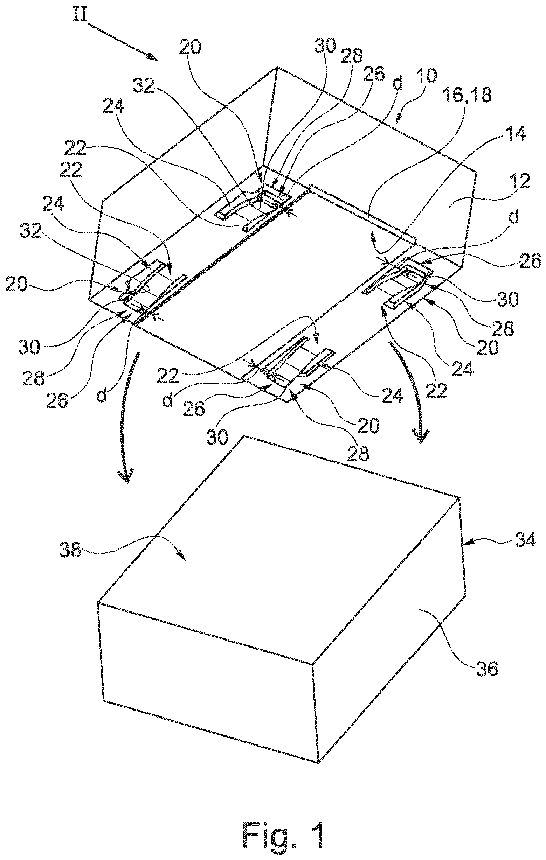

Figure 1 shows a connection part 10.

The connection part 10 comprises a body portion 12.

A connection surface 14 is arranged on the body portion 12.

In the present example, the connection surface 14 is formed by an adhesive layer 16 being arranged on the body portion 12.

The adhesive layer 16 comprises an adhesive tape 18.

The connection part 10 further comprises four positioning protrusions 20.

The positioning protrusions 20 are located at a distance d away from an edge of the connection surface 14 respectively. Put otherwise, the positioning protrusions 20 are located outside the connection surface 14.

In the present example, the positioning protrusions 20 are leg-shaped.

The positioning protrusions 20 substantially extend parallel to the connection surface 14.

A first end portion 22 of each of the positioning protrusions 20 is connected to the body portion 12.

Moreover, each of the positioning protrusions 20 comprises an elastically deformable section 24.

Thus, the positioning protrusions 20 are movably connected to the body portion 12 via these sections 24.

In the present example, the positioning protrusions 20 and the body portion 12 are formed as an integral structure. More precisely, the connection part 10 is an injection molded part made from plastics material. Thus, the body portion 12 and the positioning protrusions 20 are formed together in a single injection molding process.

In Figure 1, the positioning protrusions 20 are shown in a pre-assembly position. In this position, the positioning protrusions 20 at least partially protrude with respect to the connection surface 14.

In the example, second end portions 26 of each positioning protrusion 20 being arranged opposite the respective first end portion 22 protrude over the connecting surface 14.

Due to the movability of the positioning protrusions 20, they can also assume an assembly position wherein the positioning protrusions 20 are flush with the connection surface 14 or are retracted with respect to the connection surface 14.

The connection part 10 also comprises a securing means 28.

More precisely, a securing means 28 is provided for each of the positioning protrusions 20.

In the present example, each securing means 28 comprises a securing protrusion 30 being located on the corresponding positioning protrusion 20 and a securing depression 32 being located on the body portion 12.

The securing means 28 is configured for securing the corresponding positioning protrusion 20 in the assembly position.

To this end, each of the securing protrusions 30 engages the corresponding securing depression 32.

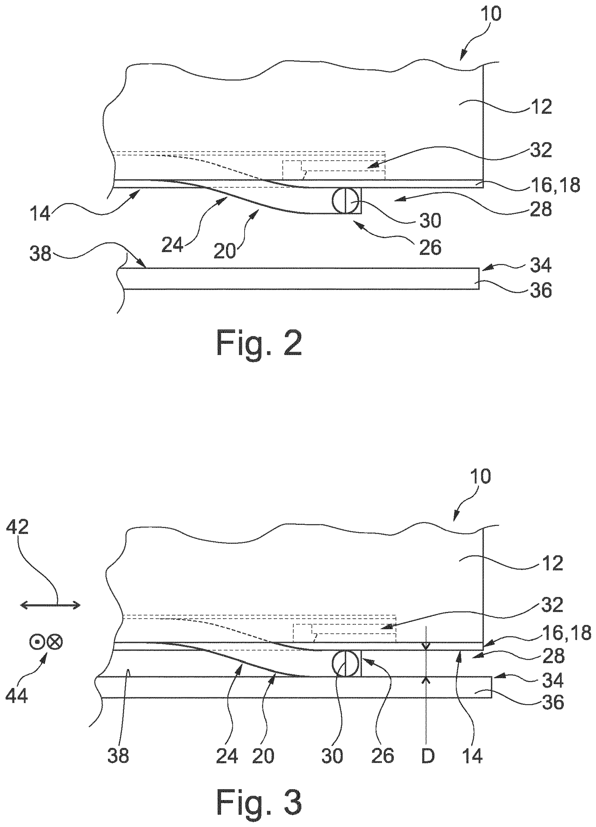

Obviously, in the pre-assembly position as shown in Figure 2, the securing protrusions 30 and the securing depressions 32 are disengaged.

Furthermore, the securing means 28 are configured such that the state in which the corresponding positioning protrusion 20 is secured on the body portion 12 may be reached by applying a force equaling a predefined mounting force. This means that the positioning protrusions 20 will be moved into the assembly position when the connecting part 10 is mounted to a mating part as will be explained further below.

This force is used for moving the securing protrusions 30 into the corresponding securing depressions 32, thereby also elastically deforming the elastically deformable sections 24.

Additionally, the securing means 28 is configured for producing a sound when the securing protrusion 30 reaches the corresponding securing depression. Thus, a user can be sure that the corresponding positioning protrusion 20 is secured in the corresponding assembly position. The user receives an acoustic confirmation. Consequently, no visual inspection is necessary.

The connection part 10 is configured for being connected to a mating part 34 via the connection surface 14.

Also the mating part 34 has a mating part body 36.

On the mating part body 36 a counter-connection surface 38 is provided.

The connection part 10 and the mating part 34 are configured for being connected via the connection surface 14 and the counter-connection surface 38.

Once connected, the connection part 10 and the mating part 34 form a part connection 40.

In the following, with additional reference to Figures 2 to 5, a method for adhesively connecting the connection part 10 and the mating part 34 is explained. In other words, using the method, a part connection 40 is produced.

Figure 2 shows a situation corresponding to Figure 1, wherein the connection part 10 and the mating part 34 do not at all contact each other.

A first step of the method is illustrated in Figure 3.

The first step comprises bringing the positioning protrusions 20 in contact with the mating part body 36.

The positioning protrusions 20 are in the pre-assembly position, i.e. they protrude with respect to the connection surface 14.

Consequently, the connection surface 14 and the counter-connection surface 38 are arranged within a predefined distance D.

In this configuration, the positioning protrusions 20 may slide on the mating part body 36 in order to bring the connection surface 14 and the counter-connection surface 38 in a desired relative position.

Possible sliding directions are indicated by arrows 42, 44.

While sliding, the connection surface 14 and the counter-connection surface 38 are arranged within the predefined distance D.

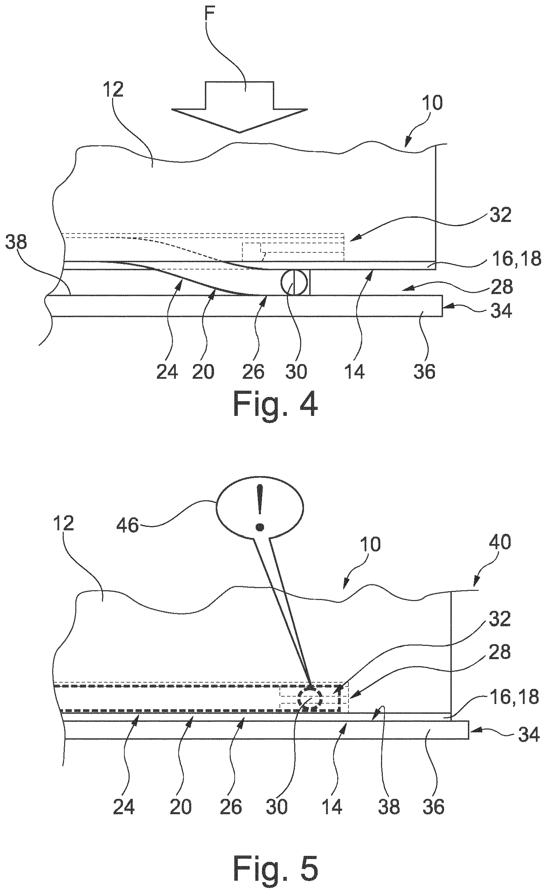

Thereafter, a mounting force F is applied to the connection part 10. The mounting force F is directed towards the mating part 34 (cf. Figure 4).

More precisely, the mounting force F is oriented perpendicular to the connection surface 14 and the counter-connection surface 38.

As a consequence of the mounting force F, the connection part 10 and the mating part 34 are pressed towards one another. In this context, the elastically deformable sections 24 of the positioning protrusion 20 are deformed elastically such that the positioning protrusions 20 are bent towards the body portion 12 of the connection part 10.

The mounting force F is applied until the connection surface 14 and the counter-connection surface 38 contact each other (cf. Figure 5). In this state, the positioning protrusions 20 reach the assembly position in which they are retracted with respect to the connection surface 14.

Moreover, each of the securing protrusions 30 engages the corresponding securing depression 32. This means that the positioning protrusions 20 are secured in the assembly position.

The securing protrusions 30 produce a sound 46 when engaging the corresponding securing depression 32.

It is noted that in the example shown in the figures, the form of the connection part 10 and the mating part 34 is purely illustrative. The connection part 10 and the mating part 34 can have any form as long as the connecting surface 14 and the counter-connection surface 38 are suitable for contacting each other.

In other examples, the connection part 10 and/or the mating part 34 are formed as portions of a respective bigger part.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: connection part
- 12: body portion
- 14: connecting surface
- 16: adhesive layer
- 18: adhesive tape
- 20: positioning protrusion
- 22: first end portion
- 24: elastically deformable section
- 26: second end portion
- 28: securing means
- 30: securing protrusion
- 32: securing depression
- 34: mating part
- 36: mating part body
- 38: counter-connection surface
- 40: part connection
- 42: arrow
- 44: arrow
- 46: sound

- d: distance
- D: predefined distance
- F: mounting force

## Claims

1. A connection part (10) for an industrial assembly process, the connection part (10) having
a body portion (12) and a connection surface (14) being arranged on the body portion (12), the connection surface (14) being configured for being connected to a mating part (34), and at least one positioning protrusion (20) being located at a distance (d) away from an edge of the connection surface (14) and being movably connected to the body portion (12),
wherein in a pre-assembly position the positioning protrusion (20) at least partially protrudes with respect to the connection surface (14), and in an assembly position the positioning protrusion (20) is flush with the connection surface (14) or is retracted with respect to the connection surface (14),
**characterized in that** the at least one positioning protrusion (20) is leg-shaped, one end portion (22) thereof being connected to the body portion (12).

2. The connection part (10) according to claim 1, wherein the connection surface (14) is formed by an adhesive layer (16) being arranged on the body portion (12).

3. The connection part (10) according to claim 2, wherein the adhesive layer (16) comprises an adhesive tape (18).

4. The connection part (10) according to any one of the preceding claims, wherein the at least one positioning protrusion (20) is movably connected to the body portion (12) via an elastically deformable section of the body portion (12) and/or an elastically deformable section (24) of the positioning protrusion (20).

5. The connection part (10) according to any one of the preceding claims, wherein at least two positioning protrusions (20) are provided on the body portion (12).

6. The connection part (10) according to any of the preceding claims, comprising a securing means (28), wherein in the assembly position the at least one positioning protrusion (20) is secured on the body portion (12) by the securing means (28).

7. The connection part (10) according to claim 6, wherein the securing means (28) comprises a securing protrusion (30) and a corresponding securing depression (32) for each of SE:TOP
the positioning protrusions (20), wherein in the assembly position the securing protrusion (30) engages the securing depression (32) and in the pre-assembly position the securing protrusion (30) and the securing depression (32) are disengaged.

8. The connection part (10) according to claim 6 or claim 7, wherein the securing means (28) is configured for producing a sound (46) when reaching the state in which the at least one positioning protrusion (20) is secured on the body portion (12).

9. The connection part (10) according to any one of claims 6 to 8, wherein the securing means (28) is configured such that the state in which the at least one positioning protrusion (20) is secured on the body portion (12) is reached by applying a force equaling, exceeding or being smaller than a predefined mounting force (F).

10. The connection part (10) according to any one of the preceding claims, wherein the body portion (12) and the positioning protrusion (20) are formed as an integral structure.

11. A part connection (40) comprising a connection part (10) according to any one of the previous claims and a mating part (34) having a mating part body (36) with a counter-connection surface (38), wherein the connection part (10) and the mating part (34) are connected via the connection surface (14) and the counter-connection surface (38).

12. Method for adhesively connecting a connection part (10) and a mating part (34),
the connection part (10) having a body portion (12), a connection surface (14) being arranged on the body portion (12), and at least one positioning protrusion (20) being located at a distance (d) away from an edge of the connection surface (14), being movably connected to the body portion (12), and being leg-shaped, wherein one end portion (22) thereof is connected to the body portion (12), and
the mating part (34) having a mating part body (36) with a counter-connection surface (38), the method comprising:
- bringing the at least one positioning protrusion (20) in contact with the mating part body (36), wherein the at least one positioning protrusion (20) at least partially protrudes with respect to the connection surface (14) such that the connection surface (14) and the counter-connection surface (38) are arranged within a predefined distance (D) from each other,
- pressing the connection part (10) and the mating part (34) towards one another until the connection surface (14) and the counter-connection surface (38) contact each other and such that the at least one positioning protrusion (20) is moved to a position in which it is flush with the connection surface (14) or is retracted with respect to the connection surface (14).

13. The method according to claim 12, comprising: sliding the at least one positioning protrusion (20) on the mating part body (36) and bringing the connection surface (14) and the counter-connection surface (38) in a desired relative position while the connection surface (14) and the counter-connection surface (38) are arranged within the predefined distance (D).

14. The method according to claim 12 or 13, wherein pressing the connection part (10) and the mating part (34) towards one another comprises applying a mounting force (F) to at least one of the connection part (10) and the mating part (34), the mounting force (F) being oriented non-parallel to the connection surface (14).

## Patentansprüche

1. Verbindungsteil (10) für einen industriellen Montageprozess, wobei das Verbindungsteil (10) aufweist:
einen Körperabschnitt (12) und eine Verbindungsfläche (14), die an dem Körperabschnitt (12) angeordnet ist, wobei die Verbindungsfläche (14) dafür eingerichtet ist, mit einem Gegenstück (34) verbunden zu werden, und mindestens ein Positionierungsvorsprung (20) in einem Abstand (d) von einem Rand der Verbindungsfläche (14) angeordnet und mit dem Körperabschnitt (12) beweglich verbunden ist,
wobei der Positionierungsvorsprung (20) in einer Vormontageposition in Bezug auf die Verbindungsfläche (14) mindestens teilweise vorsteht und der Positionierungsvorsprung (20) in einer Montageposition mit der Verbindungsfläche (14) bündig ist oder in Bezug auf die Verbindungsfläche (14) zurückgezogen ist,
**dadurch gekennzeichnet, dass** der mindestens eine Positionierungsvorsprung (20) die Form eines Schenkels hat, wobei ein Endabschnitt (22) desselben mit dem Körperabschnitt (12) verbunden ist.

2. Verbindungsteil (10) nach Anspruch 1, wobei die Verbindungsfläche (14) durch eine Klebeschicht (16) gebildet wird, die auf dem Körperabschnitt (12) angeordnet ist.

3. Verbindungsteil (10) nach Anspruch 2, wobei die Klebeschicht (16) ein Klebeband (18) umfasst.

4. Verbindungsteil (10) nach einem der vorangehenden Ansprüche, wobei der mindestens eine Positionierungsvorsprung (20) über eine elastisch verformbare Sektion des Körperabschnitts (12) und/oder eine elastisch verformbare Sektion (24) des Positionierungsvorsprungs (20) beweglich mit dem Körperabschnitt (12) verbunden ist.

5. Verbindungsteil (10) nach einem der vorangehenden Ansprüche, wobei mindestens zwei Positionierungsvorsprünge (20) an dem Körperabschnitt (12) angeordnet sind.

6. Verbindungsteil (10) nach einem der vorangehenden Ansprüche, umfassend ein Sicherungsmittel (28), wobei der mindestens eine Positionierungsvorsprung (20) in der Montageposition durch das Sicherungsmittel (28) an dem Körperabschnitt (12) gesichert ist.

7. Verbindungsteil (10) nach Anspruch 6, wobei das Sicherungsmittel (28) für jeden der Positionierungsvorsprünge (20) einen Sicherungsvorsprung (30) und eine entsprechende Sicherungsvertiefung (32) aufweist, wobei der Sicherungsvorsprung (30) in der Montageposition in die Sicherungsvertiefung (32) eingreift und der Sicherungsvorsprung (30) und die Sicherungsvertiefung (32) in der Vormontageposition nicht im Eingriff stehen.

8. Verbindungsteil (10) nach Anspruch 6 oder Anspruch 7, wobei das Sicherungsmittel (28) so eingerichtet ist, dass es ein Geräusch (46) erzeugt, wenn es den Zustand erreicht, in dem der mindestens eine Positionierungsvorsprung (20) an dem Körperabschnitt (12) gesichert ist.

9. Verbindungsteil (10) nach einem der Ansprüche 6 bis 8, wobei das Sicherungsmittel (28) so eingerichtet ist, dass der Zustand, in dem der mindestens eine Positionierungsvorsprung (20) an dem Körperabschnitt (12) gesichert ist, durch Anlegen einer Kraft erreicht wird, die gleich einer zuvor festgelegten Montagekraft (F) ist, diese Montagekraft (F) übersteigt oder kleiner als die Montagekraft (F) ist.

10. Verbindungsteil (10) nach einem der vorangehenden Ansprüche, wobei der Körperabschnitt (12) und der Positionierungsvorsprung (20) als eine integrale Struktur ausgebildet sind.

11. Teileverbindung (40), umfassend ein Verbindungsteil (10) nach einem der vorangehenden Ansprüche und ein Gegenstück (34), das einen Gegenstückkörper (36) mit einer Gegenverbindungsfläche (38) aufweist, wobei das Verbindungsteil (10) und das Gegenstück (34) über die Verbindungsfläche (14) und die Gegenverbindungsfläche (38) verbunden sind.

12. Verfahren zum klebenden Verbinden eines Verbindungsteils (10) und eines Gegenstücks (34), wobei das Verbindungsteil (10) einen Körperabschnitt (12), eine Verbindungsfläche (14), die an dem Körperabschnitt (12) angeordnet ist, und mindestens einen Positionierungsvorsprung (20) aufweist, der sich in einem Abstand (d) von einem Rand der Verbindungsfläche (14) befindet, beweglich mit dem Körperabschnitt (12) verbunden ist und die Form eines Schenkels hat, wobei ein Endabschnitt (22) desselben mit dem Körperabschnitt (12) verbunden ist, und
wobei das Gegenstück (34) einen Gegenstückkörper (36) mit einer Gegenverbindungsfläche (38) aufweist, wobei das Verfahren umfasst:
- Inkontaktbringen des mindestens einen Positionierungsvorsprungs (20) mit dem Gegenstückkörper (36), wobei der mindestens eine Positionierungsvorsprung (20) in Bezug auf die Verbindungsfläche (14) mindestens teilweise so vorsteht, dass die Verbindungsfläche (14) und die Gegenverbindungsfläche (38) innerhalb eines zuvor festgelegten Abstands (D) voneinander angeordnet sind,
- Drücken des Verbindungsteils (10) und des Gegenstücks (34) in Richtung zueinander, bis die Verbindungsfläche (14) und die Gegenverbindungsfläche (38) einander kontaktieren, und so, dass der mindestens eine Positionierungsvorsprung (20) in eine Position bewegt wird, in der er mit der Verbindungsfläche (14) bündig ist oder in Bezug auf die Verbindungsfläche (14) zurückgezogen ist.

13. Verfahren nach Anspruch 12, umfassend: Verschieben des mindestens einen Positionierungsvorsprungs (20) auf dem Körper (36) des Gegenstücks und Bringen der Verbindungsfläche (14) und der Gegenverbindungsfläche (38) in eine gewünschte relative Position, während die Verbindungsfläche (14) und die Gegenverbindungsfläche (38) innerhalb des zuvor festgelegten Abstands (D) angeordnet sind.

14. Verfahren nach Anspruch 12 oder 13, wobei das Drücken des Verbindungsteils (10) und des Gegenstücks (34) in Richtung zueinander das Anlegen einer Montagekraft (F) an mindestens eines von dem Verbindungsteil (10) und dem Gegenstück (34) umfasst, wobei die Montagekraft (F) nicht-parallel zu der Verbindungsfläche (14) ausgerichtet ist.

## Revendications

1. Pièce de liaison (10) pour un processus d'assemblage industriel, la partie de liaison (10) comportant une partie corps (12) et une surface de liaison (14) disposée sur la partie corps (12), la surface de liaison (14) étant configurée pour être reliée à une partie d'accouplement (34), et au moins une protubérance de positionnement (20) étant situé à une distance (d) d'un bord de la surface de liaison (14) et étant reliée de manière mobile à la partie corps (12), dans laquelle, dans une position de préassemblage, la protubérance de positionnement (20) fait au moins partiellement saillie par rapport à la surface de liaison (14), et dans une position de montage, la protubérance de positionnement (20) affleure la surface de liaison (14) ou est rétractée par rapport à la surface de liaison (14),
**caractérisée en ce que** la au moins une protubérance de positionnement (20) est en forme de patte, une partie d'extrémité (22) de celle-ci étant reliée à la partie corps (12) .

2. Pièce de liaison (10) selon la revendication 1, dans laquelle la surface de liaison (14) est formée par une couche adhésive (16) disposée sur la partie corps (12).

3. Pièce de liaison (10) selon la revendication 2, dans laquelle la couche adhésive (16) comprend un ruban adhésif (18) .

4. Pièce de liaison (10) selon l'une quelconque des revendications précédentes, dans laquelle la au moins une protubérance de positionnement (20) est reliée de manière mobile à la partie corps (12) par l'intermédiaire d'une section élastiquement déformable de la partie corps (12) et/ou une section élastiquement déformable (24) de la protubérance de positionnement (20).

5. Pièce de liaison (10) selon l'une quelconque des revendications précédentes, dans laquelle au moins deux protubérances de positionnement (20) sont prévues sur la partie corps (12).

6. Pièce de liaison (10) selon l'une quelconque des revendications précédentes, comprenant un moyen de fixation (28), dans laquelle, dans la position d'assemblage, la au moins une protubérance de positionnement (20) est fixée sur la partie corps (12) par le moyen de fixation (28).

7. Pièce de liaison (10) selon la revendication 6, dans laquelle le moyen de fixation (28) comprend une protubérance de fixation (30) et un creux de fixation correspondant (32) pour chacune des protubérances de positionnement (20), dans laquelle, dans la position d'assemblage, la protubérance de fixation (30) vient en prise avec le creux de fixation (32) et, dans la position de préassemblage, la protubérance de fixation (30) et le creux de fixation (32) sont désaccouplés.

8. Pièce de liaison (10) selon la revendication 6 ou la revendication 7, dans laquelle le moyen de fixation (28) est configuré pour produire un son (46) lorsqu'il atteint l'état dans lequel au moins une protubérance de positionnement (20) est fixée sur la partie corps (12).

9. Pièce de liaison (10) selon l'une quelconque des revendications 6 à 8, dans laquelle le moyen de fixation (28) est configuré de telle sorte que l'état dans lequel la au moins une protubérance de positionnement (20) est fixée sur la partie corps (12) est atteint en appliquant une force égale, supérieure ou inférieure à une force de montage prédéfinie (F).

10. Pièce de liaison (10) selon l'une quelconque des revendications précédentes, dans laquelle la partie corps (12) et la protubérance de positionnement (20) sont formées en tant que structure monobloc.

11. Liaison de pièces (40) comprenant une pièce de liaison (10) selon l'une quelconque des revendications précédentes et une pièce d'accouplement (34) ayant un corps de pièce d'accouplement (36) avec une surface de contre-liaison (38), dans laquelle la pièce de liaison (10) et la pièce d'accouplement (34) sont reliées par l'intermédiaire de la surface de liaison (14) et de la surface de contre-liaison (38) .

12. Procédé de liaison adhésive d'une pièce de liaison (10) et d'une pièce d'accouplement (34), la pièce de liaison (10) comportant une partie corps (12), une surface de liaison (14) étant disposée sur la partie corps (12), et au au moins une protubérance de positionnement (20) étant située à une distance (d) d'un bord de la surface de liaison (14), étant reliée de manière mobile à la partie corps (12), et étant en forme de patte, dans lequel une partie d'extrémité (22) de celle-ci est reliée à la partie corps (12), et
la pièce d'accouplement (34) ayant un corps de pièce d'accouplement (36) avec une surface de contre-liaison (38), le procédé comprenant :
- le fait d'amener la au moins une protubérance de positionnement (20) en contact avec le corps de pièce d'accouplement (36), la au moins une protubérance de positionnement (20) faisant au moins partiellement saillie par rapport à la surface de liaison (14) de telle sorte que la surface de liaison (14) et la surface de contre-liaison (38) sont disposées à une distance prédéfinie (D) l'une de l'autre,
- le pressage de la partie de liaison (10) et de la partie d'accouplement (34) l'une vers l'autre jusqu'à ce que la surface de liaison (14) et la surface de contre-liaison (38) soient en contact l'une avec l'autre et de telle sorte que la au moins une protubérance de positionnement (20) soit déplacée vers une position dans laquelle elle affleure la surface de liaison (14) ou est rétractée par rapport à la surface de liaison (14).

13. Procédé selon la revendication 12, comprenant : le fait de faire glisser la au moins une protubérance de positionnement (20) sur le corps de pièce d'accouplement (36) et d'amener la surface de liaison (14) et la surface de contre-liaison (38) dans une position relative souhaitée tandis que la surface de liaison (14) et la surface de contre-liaison (38) sont disposées à la distance prédéfinie (D) .

14. Procédé selon la revendication 12 ou 13, dans lequel le pressage de la partie de liaison (10) et de la partie d'accouplement (34) l'une vers l'autre comprend l'application d'une force de montage (F) à au moins l'une parmi la partie de liaison (10) et la partie d'accouplement (34), la force de montage (F) étant orientée de manière non parallèle à la surface de liaison (14).
